# EUROPÄISCHE PATENTSCHRIFT

(11) **EP 4 305 547 B1**
(45) Veröffentlichungstag und Bekanntmachung des Hinweises auf die Patenterteilung: **28.05.2025**
(21) Anmeldenummer: 22713256.0
(22) Anmeldetag: 09.03.2022
(51) Int. Cl.: G06K 19/073

(54) **KARTENKÖRPER, CHIPKARTE, VERFAHREN ZUM SCHALTEN EINER DRAHTLOSFUNKTION EINER CHIPKARTE UND VERFAHREN ZUR HERSTELLUNG EINES KARTENKÖRPERS FÜR EINE CHIPKARTE**
CARD BODY, CHIP CARD, METHOD FOR SWITCHING A WIRELESS FUNCTION OF A CHIP CARD AND METHOD FOR PRODUCING A CARD BODY FOR A CHIP CARD
CORPS DE CARTE, CARTE À PUCE, PROCÉDÉ DE COMMUTATION D'UNE FONCTION SANS FIL D'UNE CARTE À PUCE ET PROCÉDÉ DE FABRICATION D'UN CORPS DE CARTE POUR UNE CARTE À PUCE

(30) Priorität: 11.03.2021 DE 102021001312
(43) Veröffentlichungstag der Anmeldung: 17.01.2024
(73) Patentinhaber: Giesecke+Devrient ePayments GmbH, 81677 München (DE)
(72) Erfinder: BALDISCHWEILER, Michael, 81825 München (DE)
(74) Vertreter: Giesecke+Devrient IP
(86) Internationale Anmeldenummer: PCT/EP2022/025096
(87) Internationale Veröffentlichungsnummer: WO 2022/189041

(56) Entgegenhaltungen:
- US-A1- 2003 132 301
- US-A1- 2012 280 044
- US-A1- 2017 077 589

## Beschreibung

Die Erfindung betrifft einen Kartenkörper für eine Chipkarte, eine Chipkarte umfassend einen Kartenkörper und ein Chipmodul, ein Verfahren zum Schalten einer Drahtlosfunktion einer Chipkarte und ein Verfahren zur Herstellung eines Kartenkörpers für eine Chipkarte.

Kartenförmige Datenträger, insbesondere Chipkarten, werden in vielen Bereichen eingesetzt, beispielsweise zur Durchführung von Transaktionen des bargeldlosen Zahlungsverkehrs, als Ausweisdokumente oder zum Nachweis von Zugangsberechtigungen. Eine Chipkarte weist einen Kartenkörper und einen in den Kartenkörper eingebetteten integrierten Schaltkreis zum Beispiel in Form eines Chipmoduls mit einem Chip auf. Das Chipmodul wird in eine Kavität oder Modulöffnung des Kartenkörpers eingesetzt.

Im Folgenden werden Chipmodule beziehungsweise Chipkarten mit integrierter Spule betrachtet, welche eine berührungslose oder kontaktlose Kommunikation ermöglichen. Beispielsweise können Chipkartencontroller mit RFID-Funktionalität eingesetzt werden.

Es können zudem Kartenkörper mit einem metallischen Kern in Form einer metallischen Kernschicht oder eines metallischen Kernelements betrachtet werden, sowie Kartenkörper, die zum Teil oder vollständig aus Metall bestehen. Die Funktionsweise von Karten mit Dual Interface (DI)-Funktionalität besteht darin, dass ein Chipmodul verwendet wird, das selbst eine Spule enthält (Coil On Modul). Diese Spule koppelt auf den metallischen Kartenkörper.

Aus Gründen der Privatsphäre oder zur Vermeidung von man-in-the-middle Angriffen besteht zunehmend das Bedürfnis, die NFC- oder Drahtlos-Funktionalität der Chipkarte aktiv Deaktivieren bzw. Aktivieren zu können. Es sind Verfahren bekannt, die Spule auf der Chipkarte zu verändern, so dass sie funktioniert beziehungsweise deaktiviert wird. Zudem wurden auch sogenannte Störsender in der Chipkarte verbaut, die durch aktives Schütteln deaktiviert werden. Sämtliche Chipkarten dieser Art sind aufwändig in der Herstellung beziehungsweise umständlich und nicht fehlersicher zu bedienen.

Das Dokument US2017/077589 A1 offenbart eine entsprechende Chipkarte und bildet die Basis für den Oberbegriff des Anspruchs 1.

Aufgabe der vorliegenden Erfindung ist es daher, das Deaktivieren bzw. Aktivieren einer Drahtlosfunktion der Chipkarte zu verbessern.

Diese Aufgabe wird durch einen Kartenkörper für eine Chipkarte, eine Chipkarte umfassend einen Kartenkörper und ein Chipmodul, ein Verfahren zum Schalten einer Drahtlosfunktion einer Chipkarte beziehungsweise ein Verfahren zur Herstellung eines Kartenkörpers für eine Chipkarte gemäß den unabhängigen Patentansprüchen gelöst. Ausgestaltungen und Weiterbildungen der Erfindung sind in den abhängigen Ansprüchen angegeben.

Ein erfindungsgemäßer Kartenkörper für eine Chipkarte umfasst einen metallischen Grundkörper mit zwei gegenüberliegenden Hauptflächen, wobei in dem Grundkörper eine Modulöffnung zum Aufnehmen eines Chipmoduls mit einer Spule bereits erzeugt ist oder in einer Modulöffnungszone noch erzeugt wird, und
einen Schlitz, der sich von einer Umfangsfläche des Grundkörpers bis zu der Modulöffnung oder bis zu der Modulöffnungszone erstreckt und der sich zwischen den beiden Hauptflächen erstreckt,
wobei eine Schaltvorrichtung mit einem Schaltelement und einer Schaltausnehmung zum Schalten einer Drahtlosfunktion der Chipkarte vorgesehen ist,
wobei die Schaltausnehmung in Kontakt mit dem Schlitz und/ oder innerhalb der Modulöffnung oder der Modulöffnungszone angeordnet ist,
wobei das Schaltelement in oder an der Schaltausnehmung vorgesehen ist,
wobei das Schaltelement in einer Aus-Stellung den Schlitz und/oder die Spule elektrisch überbrückt und/oder einen magnetischen Fluss in der Modulöffnung blockiert, und
wobei das Schaltelement in einer Ein-Stellung den Schlitz und/oder die Spule elektrisch freigibt und/oder den magnetischen Fluss in der Modulöffnung freigibt.

Ein Grundgedanke der vorliegenden Erfindung besteht in einer Einbringung von einem Schaltmechanismus zur aktiven, selektiven Aktivierung beziehungsweise Deaktivierung der Drahtlosfunktion der Chipkarte wie einer NFC-Funktionalität oder einem anderen Funkstandard. Der Schaltmechanismus verhindert, dass eine integrierte Schaltung oder ein Chip der Chipkarte mit Energie versorgt wird und starten kann.

Bei metallischen Karten dieser Art ist ein Schlitz vorhanden, um den Ringschluss des magnetischen Flusses zu unterbinden. Dieser Schlitz beziehungsweise dessen selektive elektrische Überbrückung wird genutzt, um die Drahtlosfunktion zu deaktivieren. Wird dieser Schlitz mit einem leitenden Material mechanisch und damit elektrisch überbrückt, funktioniert die NFC-Funktion nicht. Diese Überbrückung ist nun mechanisch derart gestaltet, dass ein Benutzer aktiv diese Schaltung über ein bewegliches Teil vornimmt.

Der hier vorgeschlagene Kartenkörper hat somit den Vorteil, dass die Privatsphäre einfach und zuverlässig geschützt und man-in-the-middle Angriffe vermieden werden können.

Durch die hier vorgeschlagene Einbringung von bewegten Teilen in einen Kartenkörper, der teilweise oder komplett aus Metall besteht, kann eine derartige Schaltfunktion für die Drahtlosfunktion der Chipkarte realisiert werden. Zum Beispiel kann eine mechanische Schalteinheit vorgesehen sein, die zum einen den benötigten Kartenschlitz stabilisiert und zum anderen dem Nutzer die Möglichkeit gibt, die NFC-Funktionalität der Chipkarte bewusst zu aktivieren beziehungsweise zu deaktivieren.

Es kann vorgesehen sein, dass der Schlitz eine Kontur aufweist, die eine Überlappung in einer Richtung senkrecht zu einer Hauptfläche zwischen zwei gegenüberliegenden Wänden des Schlitzes vorsieht, dass der Schlitz die Schaltausnehmung bildet und dass die zwei gegenüberliegenden Wände das Schaltelement bilden. Auf diese Weise kann die Schaltvorrichtung mit minimalem baulichem Aufwand realisiert sein, indem lediglich die Konturen des schon benötigten Schlitzes verwendet werden. Der Schlitz muss dann mit der Überlappung ausgebildet werden.

Es ist ferner vorgesehen, dass die Schaltausnehmung als Querschnittskontur zu einer Längserstreckung des Schlitzes in diesem ausgebildet ist und dass ein Querschnitt des Schaltelements der Querschnittskontur entspricht, wobei das Schaltelement in die Schaltausnehmung einführbar und entnehmbar ist. So wird der Schlitz größer als ursprünglich benötigt ausgebildet, um das Schaltelement aufzunehmen. Das Schaltelement kann zum Beispiel als Dorn oder Stift ausgebildet sein. Wenn das Schaltelement aus einem elektrisch leitenden Material besteht, ist die NFC-Funktionalität der Chipkarte bei eingesetztem Schaltelement deaktiviert.

Es ist vorgesehen, dass das Schaltelement aus einem elektrisch nichtleitenden Material besteht und dass der Querschnitt des Schaltelements größer ist als die Querschnittskontur des Schlitzes, so dass das eingeführte Schaltelement den Schlitz aufdehnt. Durch die Aufdehnung wird der Kontakt der beiden Wände des Schlitzes unterbrochen und damit die NFC-Funktionalität der Chipkarte bei eingesetztem Schaltelement aktiviert.

Es kann ferner vorgesehen sein, dass in dem Schlitz ein Federelement von der Umfangsfläche beabstandet derart angeordnet ist, dass das Federelement ein Entnehmen des Schaltelements aus dem Schlitz unterstützt. Es kann zum Beispiel ein Ratsmechanismus ähnlich wie bei einer SIM-Karte zum Einsatz gelangen. Das Federelement kann elektrisch leitend oder nichtleitend sein und auch Teil der Schaltung sein. So kann ausschließlich das Federelement das Schaltelement bilden oder das Federelement und der Dorn oder der Stift können das Schaltelement bilden. Das Federelement kann eine Spiralfeder, Flachfeder oder ein anderes elastisches Element sein.

Es kann vorgesehen sein, dass die Schaltausnehmung als Kanal ausgebildet ist, der einen Überschneidungsbereich mit dem Schlitz und einen von dem Schlitz beabstandeten Haltebereich aufweist, und dass das Schaltelement beweglich in dem Kanal angeordnet ist. Der Kanal oder die Ausnehmung bietet eine Führung für ein elektrisch leitendes Schaltelement, das den Schlitz selektiv überbrücken kann, um die NFC-Funktionalität der Chipkarte zu deaktivieren.

Es kann ferner vorgesehen sein, dass das Schaltelement mindestens eine Kugel umfasst. Die Kugel oder die Kugeln lassen sich sehr einfach in dem Kanal bewegen, um die Schaltfunktion zu realisieren.

Es kann vorgesehen sein, dass der Kanal mit einer offenen Fläche in der Hauptfläche ausgebildet ist und dass der Kanal mit einer transparenten Abdeckung bedeckt ist. Auf diese Weise kann ein Benutzer den Schaltzustand optisch erkennen und kontrollieren. So kann die Bedienung vereinfacht werden.

Es kann ferner vorgesehen sein, dass der Schlitz im Bereich der Umfangsfläche eine Schaltausnehmung in Form eines im Wesentlichen parallel zu der Umfangsfläche verlaufenden Teils des Schlitzes und ein von der Umfangsfläche bedienbares Schaltelement in Form eines Teils der Umfangsfläche aufweist. Dieser Aufbau kann zum Beispiel durch eine entsprechend konturierte Form des Schlitzes realisiert werden, was eine einfache Herstellung ermöglicht. Das Schaltelement kann in einem Ruhezustand auf beiden Seiten des Schlitzes in Kontakt mit dem Grundkörper sein, so dass der Schlitz überbrückt ist und die NFC-Funktionalität der Chipkarte deaktiviert ist. Wenn nun zum Beispiel in einem mittleren Bereich auf das Schaltelement Druck ausgeübt wird, kann sich ein Ende von dem Grundkörper wegbewegen, so dass der Schlitz geöffnet oder freigegeben wird. Dies aktiviert die NFC-Funktionalität der Chipkarte. Ein Hebelpunkt oder Auflager aus einem elektrisch nichtleitenden Material kann diese Bewegung unterstützen.

Es kann vorgesehen sein, dass der Teil des Schlitzes mit einem elektrisch nichtleitenden Material gefüllt ist. Wird nun Druck auf diesen Teil ausgeübt, bewegt sich das Schaltelement als Teil der Umfangsfläche der Chipkarte und gelangt so in elektrischen Kontakt, wodurch die NFC-Funktionalität der Chipkarte deaktiviert wird. Auf diese Weise kann die Deaktivierung auf einen Schalterdruck hin realisiert werden. In einem Ruhezustand ist dann die NFC oder andere Drahtlos-Funktionalität der Chipkarte aktiviert.

Es kann ferner vorgesehen sein, dass im Bereich der Umfangsfläche eine einen Teils des Schlitzes umfassende rechteckige Schaltausnehmung eingerichtet zur Aufnahme eines Schaltelements vorgesehen ist. In eine derartige Schaltausnehmung kann ein Schalter wie zum Beispiel ein Schiebschalter mit einem Kontakt wie einer Federzunge eingesetzt werden. So können vorgefertigte oder standardisierte Schalter zum Einsatz gelangen.

Es kann vorgesehen sein, dass im Bereich der Modulöffnung beziehungsweise der Modulöffnungszone mindestens eine Schaltausnehmung eingerichtet zur Aufnahme eines elektrisch leitenden Schaltelements vorgesehen ist, das in einer Aus-Stellung Windungen der Spule kurzschließt. Während die zuvor beschriebenen Beispiele den Ringschluss des magnetischen Flusses ermöglichen, indem der Schlitz überbrückt wird, wird hier die Spule kurzgeschlossen. Auf beide Weisen wird verhindert, dass die integrierte Schaltung oder der Chip mit Energie versorgt wird und starten kann. Das oder die Schaltelemente können zum Beispiel leitende Kugeln sein, die unterhalb der Windungen der Spule angeordnet sind. Durch ein Kippen oder Schütteln der Chipkarte kann dann die Drahtlos-Funktionalität der Chipkarte aktiviert und deaktiviert werden.

Es kann ferner vorgesehen sein, dass eine die Modulöffnung beziehungsweise die Modulöffnungszone umgebende Schaltausnehmung eingerichtet zur Aufnahme eines elektrisch leitenden Schaltelements in Form eines Schiebers vorgesehen ist, der in einer Aus-Stellung die Modulöffnung beziehungsweise die Modulöffnungszone überdeckt. Neben der Überbrückung des Schlitzes und dem Kurzschließen der Spule wird hier eine weitere Möglichkeit geboten, die Drahtlos-Funktionalität der Chipkarte zu deaktivieren. In diesem Fall wird ein magnetischer Fluss in der Modulöffnung blockiert, was dazu führt, dass keine Kopplung der Spule erfolgen kann. Auch auf diese Weise wird ein Energieeintrag in die Spule und damit in die integrierte Schaltung oder den Chip unterbunden. So kann gezielt die Drahtlos-Funktionalität der Chipkarte gesteuert werden. Die drei Möglichkeiten können entsprechend kombiniert werden.

Es kann vorgesehen sein, dass der metallische Grundkörper zwei Halbkörper aufweist, welche an einer Kontaktebene zusammengesetzt sind, wobei die Kontaktebene parallel zu den Hauptflächen verläuft. Es wird vorgeschlagen, dass der eigentliche Metallkörper aus zwei Metallhälften besteht, die zum Beispiel mit Hilfe eines Klebers verbunden werden. Dieser Aufbau kann auch als Sandwichaufbau aus zwei Halbschalen bezeichnet werden. Es besteht nun die Möglichkeit, die Innenseiten der Halbschalen mechanisch mit einfachen standardmäßigen Verfahren zu bearbeiten, zum Beispiel fräsen, schleifen, lasern, Bearbeitung mit Wasserstrahl, usw. Mit diesem Verfahren lassen sich nun eine Vielzahl von weiteren Aussparungen in die Chipkarte einbringen. Es besteht nun die Möglichkeit, zum Beispiel für die Kugeln Vertiefungen einzuführen, damit sie in einer bestimmten Ruhelage und/oder Schaltlage stabil bleiben. Es kann auch über den entstandenen Hohlraum ein Drucktaster verwirklicht werden.

Eine erfindungsgemäße Chipkarte umfasst einen Kartenkörper wie zuvor beschrieben, mit oder ohne Kunststoffdeckschichten, und ein zumindest teilweise in die Modulöffnung des Kartenkörpers eingebettetes Chipmodul. Es gelten die gleichen Vorteile und Modifikationen wie zuvor beschrieben.

Ein erfindungsgemäßes Verfahren zum Schalten einer Drahtlosfunktion einer Chipkarte, wobei die Chipkarte einen metallischen Grundkörper mit einem Schlitz und eine Modulöffnung mit einem Chipmodul mit einer Spule aufweist, umfasst die Schritte:
- Einschalten einer Drahtlosfunktion durch elektrisches Freigeben des Schlitzes und/oder der Spule und/oder durch Freigeben des magnetischen Flusses in der Modulöffnung mittels Bewegens eines Schaltelements in oder an der Schaltausnehmung in eine Ein-Stellung, und/oder
- Ausschalten einer Drahtlosfunktion durch elektrisches Überbrücken des Schlitzes und/oder der Spule und/oder durch Blockieren des magnetischen Flusses in der Modulöffnung mittels Bewegens eines Schaltelements in oder an der Schaltausnehmung in eine Aus-Stellung.

Es gelten die gleichen Vorteile und Modifikationen wie zuvor beschrieben.

Ein erfindungsgemäßes Verfahren zur Herstellung eines Kartenkörpers für eine Chipkarte umfasst die Schritte:
- Bereitstellen eines metallischen Grundkörpers mit zwei gegenüberliegenden Hauptflächen und einer die beiden Hauptflächen verbindenden, umlaufenden Umfangsfläche, wobei in dem Grundkörper eine Modulöffnung zum Aufnehmen eines Chipmoduls bereits erzeugt ist oder in einer Modulöffnungszone noch erzeugt wird, und wobei ein Schlitz zwischen der Umfangsfläche und der Modulöffnung oder der Modulöffnungszone ausgebildet ist,
- Vorsehen einer Schaltvorrichtung mit einem Schaltelement und einer Schaltausnehmung zum Schalten einer Drahtlosfunktion der Chipkarte, durch
- Erstellen der Schaltausnehmung in Kontakt mit dem Schlitz und/oder innerhalb der Modulöffnung, und
- Vorsehen des Schaltelements in oder an der Schaltausnehmung.

Es gelten die gleichen Vorteile und Modifikationen wie zuvor beschrieben.

Die vorliegende Erfindung wird nachfolgend mit Bezug auf die beiliegenden Zeichnungen beispielhaft beschrieben. Darin zeigen
- Fig. 1:: eine Draufsicht eines Kartenkörpers für eine Chipkarte;
- Fig. 2:: eine Draufsicht einer Stirnseite des Kartenkörpers aus Fig. 1;
- Fig. 3:: eine Teilansicht einer Stirnseite eines Kartenkörpers mit einer Schaltvorrichtung mit einem Schlitz;
- Fig. 4:: eine Teilansicht einer Stirnseite eines Kartenkörpers mit einer Schaltvorrichtung mit einer Verzahnung;
- Fig. 5:: eine Teilansicht einer Stirnseite eines Kartenkörpers mit einer Schaltvorrichtung mit einem Dorn;
- Fig. 6a:: eine Teilansicht einer Stirnseite eines Kartenkörpers mit einer Schaltvorrichtung mit einem Kanal und Kugeln in einer Ein-Stellung;
- Fig. 6b:: eine Teilansicht des Kartenkörpers aus Fig. 6a in einer Aus-Stellung;
- Fig. 7:: eine Teilansicht einer Hauptfläche des Kartenkörpers aus Fig. 6b;
- Fig. 8:: eine Teilansicht einer Hauptfläche eines Kartenkörpers mit einer Schaltvorrichtung im Bereich einer Umfangsfläche des Kartenkörpers;
- Fig. 9:: eine Teilansicht einer Hauptfläche eines Kartenkörpers mit einer Schaltvorrichtung mit einer Schaltausnehmung und einem Schalter;
- Fig. 10:: eine Teilansicht einer Hauptfläche eines Kartenkörpers mit einer Schaltvorrichtung im Bereich einer Spule der Chipkarte;
- Fig. 11:: eine Teilansicht einer Hauptfläche eines Kartenkörpers mit einer Schaltvorrichtung mit einem Schieber;
- Fig. 12:: eine schematische Darstellung eines Verfahrens zum Schalten einer Drahtlosfunktion einer Chipkarte; und
- Fig. 13:: eine schematische Darstellung eines Verfahrens zur Herstellung eines Kartenkörpers.

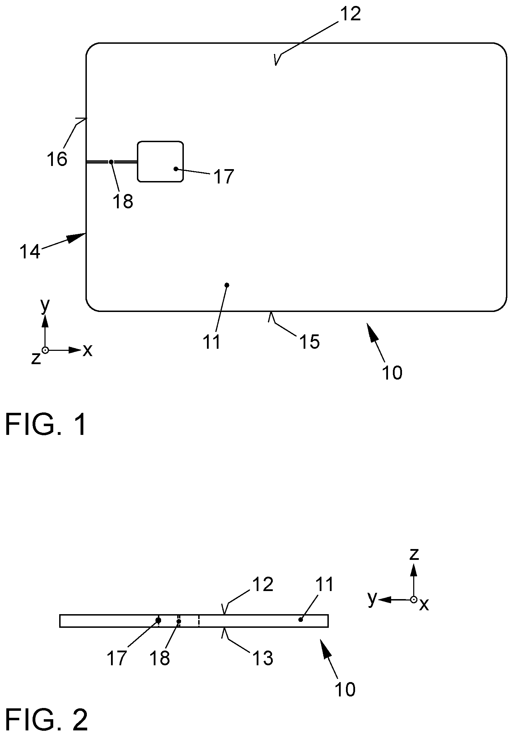

Fig. 1 zeigt einen Kartenkörper 10 für eine Chipkarte. Der Kartenkörper 10 hat einen metallischen Grundkörper 11 mit zwei gegenüberliegenden Hauptflächen, von denen eine Hauptfläche 12 in Fig. 1 sichtbar ist. Die andere, gegenüberliegende Hauptfläche 13 ist in Fig. 2 dargestellt. Die beiden Hauptflächen 12, 13 verlaufen parallel zueinander und sind durch eine umlaufende Umfangsfläche 14 verbunden. Der metallische Grundkörper 11 kann zum Beispiel in Form eines Kerns oder einer Schicht aus einer Edelstahllegierung beispielsweise mit einer Dicke von 400 µm vorliegen. Die Dicke des Grundkörpers 11 kann zum Beispiel zwischen 50 µm und 920 µm betragen.

Der metallische Grundkörper 11 hat eine rechteckige Form in einer x-y-Ebene, in der die Umfangsfläche 14 mit zwei in x-Richtung verlaufenden Längsflächen 15 und zwei in y-Richtung verlaufenden Stirnflächen 16 liegt. Die Dicke des Grundkörpers 11 erstreckt sich in z-Richtung.

Eine Modulöffnung 17 für ein Chipmodul ist in der Hauptfläche 12 des Kartenkörpers 10 ausgenommen. Die Modulöffnung 17 erstreckt sich hier durch den gesamten metallischen Grundkörper 11, kann aber auch als Sacklochöffnung ausgebildet sein. Sie kann auch erst später erzeugt werden; dann ist statt der Modulöffnung 17 eine Modulöffnungszone vorgesehen, in welcher später die Modulöffnung 17 noch erzeugt wird. Die Modulöffnung 17 wird beispielsweise mittels eines Laserarbeitsganges oder Fräsarbeitsganges erstellt.

In dem metallischen Grundkörper 11 ist ein Schlitz 18 vorgesehen, der sich von der Umfangsfläche 14 oder mit anderen Worten von einer Außenkante des metallischen Grundkörpers 11 zu der Modulöffnung 17 erstreckt. Somit verbindet der Schlitz 18 die Modulöffnung 17 mit der Umfangsfläche 14. Der Schlitz 18 verläuft in y-Richtung, das heißt parallel zu der Längsfläche 15. Der Schlitz 18 hat zum Beispiel eine Breite zwischen 30 µm und 100 µm, bevorzugt zwischen 50 µm und 80 µm.

In Fig. 1 ist der Schlitz 18 auf einer linken Seite dargestellt. Der Schlitz 18 kann auch an einer rechten, oberen oder unteren Seite des Grundkörpers 11 angeordnet sein. Der Schlitz 18 dient zur Vermeidung von Kurzschlussströmen beziehungsweise Wirbelströmen.

Fig. 2 zeigt eine Darstellung der Stirnfläche 16 des Kartenkörpers 10. Erkennbar ist, dass der Schlitz 18 den Grundkörper 11 in der Dicke oder Höhe, das heißt der z-Richtung, vollständig durchtrennt. Der Schlitz 18 verbindet somit die beiden Hauptflächen 12 und 13. Der Schlitz 18 reicht in y-Richtung von der Stirnfläche 16 bis zu der Modulöffnung 17.

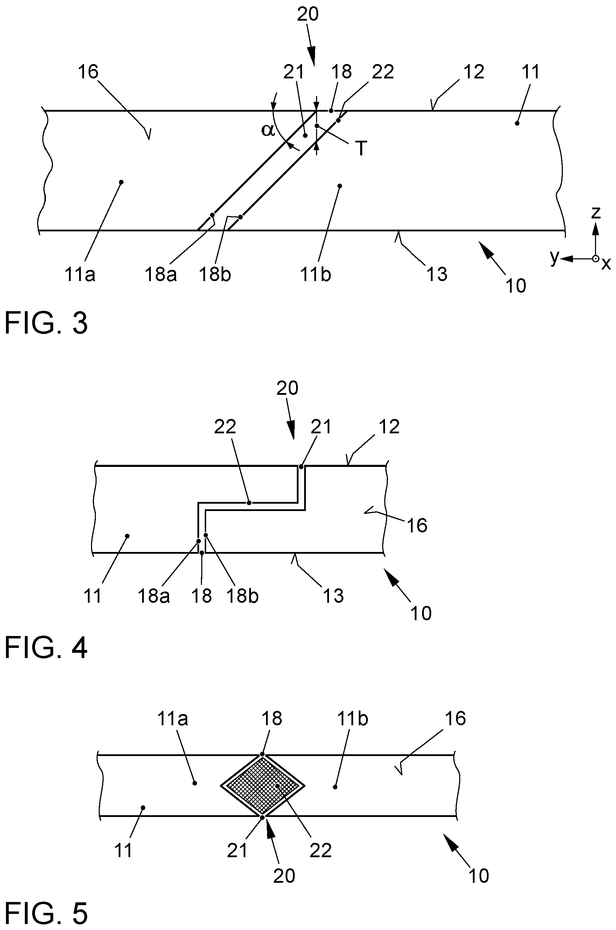

Fig. 3 zeigt eine Teilansicht der Stirnfläche 16 des Kartenkörpers 10 oder des metallischen Grundkörpers 11 mit einem Schlitz 18. Ein Eintrittswinkel α des Schlitzes 18 ist zu der Hauptfläche 12 und analog zu der Hauptfläche 13 ungleich 90°, insbesondere kleiner 80°.

In Fig. 3 ist der Schlitz 18 durchgängig in einem 45° Winkel ausgeführt. Der Eintrittswinkel α kann je nach gewählter Seite oder Wand des Schlitzes 18 45° oder als entsprechender Supplementwinkel 135° betragen.

Der schräge Schlitz 18 bewirkt eine Überlappung oder Überdeckung zwischen zwei gegenüberliegenden Wänden 18a und 18b des Schlitzes 18. Diese Überlappung oder Überdeckung liegt in Richtung einer Flächennormale zu der Hauptfläche 12 vor oder anders ausgedrückt in Richtung der Dicke oder Höhe des Kartenkörpers 10 oder des Grundkörpers 11. In den Figuren ist dies die z-Richtung. Die beiden Wände 18a, 18b können parallel verlaufen.

Die oben angegebenen Winkel für den Schlitz 18 erlauben für die üblichen Dicken der Kartenkörper von zum Beispiel zwischen 50 µm und 920 µm und üblichen Schnittbreiten zwischen 40 µm und 80 µm eine ausreichende Überlappung oder Überdeckung für die gewünschte Schaltfunktionalität.

In dem in Fig. 3 dargestellten Beispiel beträgt die Dicke oder Höhe des Kartenkörpers 10 oder des metallischen Grundkörpers 11 400 µm. Mit dem Eintrittswinkel α von 45° beträgt eine sichtbare Tiefe T etwa110 µm. Die sichtbare Tiefe T ist die Entfernung der Wand 18b von der Hauptfläche 12, lotrecht oder in Richtung der Flächennormalen der Hauptfläche 12 an dem Eintrittspunkt der Wand 18a betrachtet. Diese sichtbare Tiefe T kann zum Beispiel als Maß für eine Überlappung oder Überdeckung gesehen werden.

Der Schlitz 18 mit seinen Wänden 18a und 18b teilt den Grundkörper 11 in zwei Bereiche 11a und 11b, wobei der Bereich 11a auf der Seite der Wand 18a liegt und von dieser begrenzt wird. Analog liegt der Bereich 11b auf der Seite der Wand 18b und wird von dieser begrenzt.

Im Bereich des Schlitzes 18 existiert somit eine Überlappung oder Überdeckung der beiden Wände 18a und 18b und somit der zwei Bereiche 11a und 11b. Diese Überlappung oder Überdeckung liegt in Richtung der Flächennormalen der Hauptfläche 12 vor. Bei einem, auch virtuellen, Schnitt in Richtung der Flächennormalen durch den Grundkörper 11 liegen somit stets ein Schnittpunkt mit beiden Wänden 18a und 18b und somit beiden Bereichen 11a und 11b vor.

Der Kartenkörper 10 umfasst eine Schaltvorrichtung 20 zum Schalten einer Drahtlosfunktion wie einer NFC-Funktion der Chipkarte. Die Schaltvorrichtung 20 umfasst eine Schaltausnehmung 21, die hier durch den Schlitz 18 realisiert ist und ein Schaltelement 22, das hier durch eine oder beide Wände 18a und 18b des Schlitzes 18 gebildet wird.

Die Schaltausnehmung 21 liegt weitestgehend im Inneren des Grundkörpers 11 und kann zum Beispiel von der Stirnseite 16 oder von einer der Hauptflächen 12, 13 her ausgenommen werden. Dies kann zum Beispiel in einem Fräsvorgang oder mittels Laser- oder Wasserstrahlschneiden geschehen.

Die Schaltvorrichtung 20 erlaubt ein aktives Ein- und Ausschalten der Drahtlosfunktion, so dass ein Benutzer der Chipkarte entscheiden kann, wann die NFC-Funktion aktiv sein soll.

Zum Ausschalten oder Deaktivieren der Drahtlosfunktion sind die beiden Wände 18a und 18b des Schlitzes 18 in Kontakt miteinander, wodurch der Schlitz 18 elektrisch überbrückt ist. Damit wird in dem metallischen Grundkörper 11 ein Ringschluss des magnetischen Flusses unterbunden. Wird also dieser Schlitz 18 mechanisch geschlossen, erfolgt eine elektrische Überbrückung, welche die NFC-Funktion deaktiviert. Die beiden Wände 18a und 18b des Schlitzes 18 können zum Beispiel gegeneinander vorgespannt sein, um so in einer Ruhelage einen elektrischen Kontakt herzustellen, wodurch der Schlitz 18 überbrückt wird. Dadurch wird die Funktion des Schlitzes 18, den Ringschluss des magnetischen Flusses zu unterbinden, aufgehoben, so dass die Drahtlosfunktion deaktiviert ist.

Zum Einschalten oder Aktivieren der Drahtlosfunktion sind die beiden Wände 18a und 18b des Schlitzes 18 voneinander beabstandet, wodurch der Schlitz 18 elektrisch freigegeben ist. Damit wird in dem metallischen Grundkörper 11 ein Ringschluss des magnetischen Flusses erlaubt und es kann eine Kopplung einer Spule des Chipmoduls mit dem magnetischen Fluss erfolgen, so dass die NFC-Funktion aktiviert wird.

In dem Beispiel gemäß Fig. 3 können die beiden Wände 18a und 18b des Schlitzes 18 zum Beispiel gegeneinander vorgespannt sein, so dass die beiden Wände 18a, 18b in einer Ausgangs- oder Ruheposition miteinander in Kontakt sind. In dieser Position ist die Drahtlosfunktion deaktiviert.

Für eine Aktivierung der Drahtlosfunktion werden die beiden Wände 18a und 18b in eine Aktivierungsposition gebracht, bei der die beiden Wände 18a und 18b voneinander beabstandet sind, wie dies in der Fig. 3 dargestellt ist. Während der Aktivierung ist der Schlitz 18 somit vollständig geöffnet.

Die Aktivierung der Drahtlosfunktion kann erreicht werden, indem die beiden Bereiche 11a und 11b links und rechts des Schlitzes 18 durch Druck voneinander wegbewegt werden bis die beiden Wände 18a und 18b des Schlitzes 18 nicht mehr in Kontakt miteinander sind. Durch die beschriebene Anordnung ist ein Drucktaster realisiert mit dem die Drahtlosfunktion geschaltet werden kann.

In Fig. 4 ist eine Teilansicht einer Stirnseite 16 eines Grundkörpers 11 mit einer Schaltvorrichtung 20 mit einer Verzahnung dargestellt.

Wie auch in Fig. 3 bildet der Schlitz 18 die Schaltausnehmung 21 und die beiden Wände 18a und 18b bilden das Schaltelement 22. Hier verläuft der Schlitz 18 jedoch nicht geradlinig zwischen den beiden Hauptflächen 12 und 13 sondern hat eine gewinkelte Kontur mit zwei senkrecht zu den Hauptflächen 12 und 13 verlaufenden Endbereichen und einem parallel zu den Hauptflächen 12 und 13 verlaufendem Mittelbereich.

Die Schaltausnehmung 21 liegt weitestgehend im Inneren des Grundkörpers 11 und kann zum Beispiel von der Stirnseite 16 her ausgenommen werden. Dies kann zum Beispiel in einem Fräsvorgang oder mittels Laser- oder Wasserstrahlschneiden geschehen.

In einer Ausgangs- oder Ruheposition sind die beiden Wände 18a und 18b im Bereich des Mittelbereichs miteinander in Kontakt, so dass die Drahtlosfunktion unterbunden wird. Durch Auseinanderdrücken der beiden Bereiche links und rechts des Schlitzes 18 können die beiden Wände 18a und 18b in Abstand gebracht werden, wodurch die Drahtlosfunktion aktiviert wird.

Fig. 5 zeigt eine Teilansicht einer Stirnseite 16 eines Grundkörpers 11 mit einer Schaltvorrichtung 20 mit einem Schaltelement 22 in Form eines Dorns.

Die Schaltausnehmung 21 ist hier als Querschnittskontur zu einer Längserstreckung des Schlitzes 18 in diesem ausgebildet. Anders ausgedrückt, hat der Schlitz 18 laterale Erstreckungen. In dem abgebildeten Beispiel hat der Schlitz eine Rautenform. Der Schlitz 18 trennt auch hier den Grundkörper 11 in zwei Bereiche 11a und 11b links und rechts des Schlitzes 18.

Die Querschnittskontur der Schaltausnehmung 21 kann über die gesamte Länge oder nur über einen Teilbereich des Schlitzes 18 verlaufen.

Die Schaltausnehmung 21 liegt weitestgehend im Inneren des Grundkörpers 11 und kann zum Beispiel von der Stirnseite 16 her ausgenommen werden. Dies kann zum Beispiel in einem Fräsvorgang oder mittels Laser- oder Wasserstrahlschneiden geschehen.

Das Schaltelement 22 in Form des Dorns hat einen Querschnitt, der dem des Querschnitts der Querschnittskontur der Schaltausnehmung 21 entspricht, wobei das Schaltelement 22 in die Schaltausnehmung 21 von der Stirnseite 16 einführbar und entnehmbar ist.

Das Schaltelement 22 in Form des Dorns kann in einer ersten Variante metallisch beziehungsweise elektrisch leitend sein. In diesem Fall erzeugt das Schaltelement 22 eine Überbrückung des Schlitzes 18, wenn es in der Schaltausnehmung 21 angeordnet ist. Das heißt, dass ein eingesetztes Schaltelement 22 in Form des Dorns die Drahtlosfunktion der Chipkarte deaktiviert.

Die Drahtlosfunktion der Chipkarte wird aktiviert durch ein Herausnehmen des Schaltelements 22 in Form des Dorns. Dann haben die beiden Bereiche 11a und 11b links und rechts des Schlitzes 18 beziehungsweise die beiden Seitenwände des Schlitzes 18 keinen elektrischen Kontakt mehr und es kann eine Kopplung einer Spule des Chipmoduls mit dem magnetischen Fluss erfolgen, so dass die NFC-Funktion aktiviert wird.

In einer zweiten Variante kann das Schaltelement 22 in Form des Dorns aus einem nichtleitenden Material bestehen. Der Querschnitt des Schaltelements 22 in Form des Dorns ist größer als die Querschnittskontur des Schlitzes 18 und damit der Schaltausnehmung 21, so dass das eingeführte Schaltelement 22 den Schlitz 18 aufdehnt.

Die Drahtlosfunktion der Chipkarte wird durch das eingeführte Schaltelement 22 in Form des Dorns aktiviert, da es den Schlitz 18 auseinanderdrückt. So haben die beiden Bereiche 11a und 11b links und rechts des Schlitzes 18 beziehungsweise die beiden Seitenwände des Schlitzes 18 keinen elektrischen Kontakt mehr und es kann eine Kopplung einer Spule des Chipmoduls mit dem magnetischen Fluss erfolgen, so dass die NFC-Funktion aktiviert wird.

Ist das Schaltelement 22 in Form des Dorns entfernt, berühren sich die die beiden Wände des Schlitzes 18, wodurch die Drahtlosfunktion der Chipkarte deaktiviert wird.

Weiterhin kann in dem Schlitz 18 ein hier nicht dargestelltes Federelement von der Umfangsfläche beabstandet derart angeordnet sein, dass das Federelement ein Entnehmen des Schaltelements 22 aus dem Schlitz 18 beziehungsweise der Schaltausnehmung 21 unterstützt. Zum Beispiel kann ein Rastmechanismus vorgesehen sein, bei dem das eingesetzte Schaltelement 22 entgegen der Federkraft zunächst in die Schaltausnehmung 21 hineingedrückt und dann anschließend durch die Feder zumindest teilweise ausgeworfen wird.

Die Feder kann metallisch sein und als elektrischer Kontakt zwischen den beiden Wänden des Schlitzes 18 dienen. Ein nichtleitendes Schaltelement 22 in Form des Dorns schiebt diesen Federkontakt für eine Aktivierung der Drahtlosfunktion der Chipkarte dann auf.

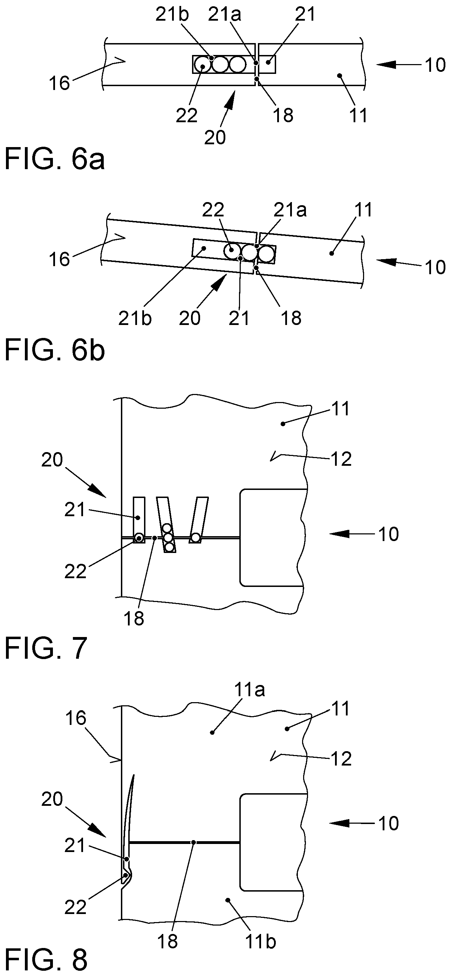

Die Fign. 6a und 6b zeigen eine Schaltvorrichtung 20 in Form eines Kugelschalters. Fig. 6a zeigt eine Teilansicht einer Stirnseite 16 eines Grundkörpers 11 mit einer Schaltvorrichtung 20 mit einer Schaltausnehmung 21 in Form eines Kanals und einem Schaltelement 22 in Form von Kugeln in einer Ein-Stellung. Fig. 6b zeigt eine Teilansicht des Grundkörpers 11 aus Fig. 6a in einer Aus-Stellung.

Die Schaltausnehmung 21 ist hier als Kanal ausgebildet, der einen Überschneidungsbereich 21a mit dem Schlitz 18 und einen von dem Schlitz 18 beabstandeten Haltebereich 21b aufweist.

Die Schaltausnehmung 21 liegt im Inneren des Grundkörpers 11 und kann zum Beispiel von der Stirnseite 16 her ausgenommen werden. Nach dem Einsetzen der Kugeln kann dann ein Verschluss des Kanals zu der Stirnseite vorgenommen werden. Dies kann zum Beispiel in einem Fräsvorgang oder mittels Laser- oder Wasserstrahlschneiden geschehen.

Das Schaltelement 22 ist beweglich in dem Kanal angeordnet und hier in Form von elektrisch leitenden Kugeln ausgebildet. Es können zum Beispiel Stahlkugeln mit einem Durchmesser von bis zu 0.25 mm verwendet werden. Es können hier eine beziehungsweise mehrere Schaltelemente 22 in Form von Kugeln zum Einsatz kommen.

In einem waagerechten Zustand des Grundkörpers 11 beziehungsweise der Chipkarte, der in Fig. 6a dargestellt ist, befinden sich die Schaltelemente 22 in Form der Kugeln in dem Haltebereich 21b. Entsprechend ist der Schlitz 18 offen und die Drahtlosfunktion der Chipkarte ist aktiviert.

In einem schräggestellten Zustand des Grundkörpers 11 beziehungsweise der Chipkarte, der in Fig. 6b dargestellt ist, befinden sich die Schaltelemente 22 in Form der Kugeln zumindest teilweise in dem Überschneidungsbereich 21a. Entsprechend ist der Schlitz 18 überbrückt und die Drahtlosfunktion der Chipkarte ist deaktiviert. Es kann vorgesehen sein, dass eine Kugel den Schlitz 18 überbrückt oder mehrere Kugeln. In dem Fall der mehreren Kugeln bilden die beteiligten Kugeln eine leitende Kette zwischen den beiden Seiten des Schlitzes.

Die Schaltelemente 22 können durch eine kleine Barriere in dem Kanal in dieser Vorzugsstellung gehalten werden, so dass die Aktivierung der Drahtlosfunktion der Chipkarte nur durch besondere Bewegungsmuster wie zum Beispiel ein Überkopfdrehen mit anschließendem Neigen der Chipkarte möglich ist.

Fig. 7 zeigt eine Teilansicht einer Hauptfläche 12 des Grundkörpers 11 aus Fig. 6b. Es sind beispielhaft drei Schaltausnehmungen 21 in Form jeweils eines Kanals vorgesehen. Es ist möglich, mehrere Schaltausnehmungen 21 parallel vorzusehen. Der in Fig. 7 dargestellte Fall dient zur Verdeutlichung verschiedener Anordnungen einer Schaltausnehmung 21. Eine Schaltausnehmung 21 kann für ein Schalten der Drahtlosfunktion der Chipkarte ausreichend sein.

So können die Schaltausnehmungen 21 in Form jeweils eines Kanals in allen möglichen Winkelvarianten zu dem Schlitz 18 angeordnet sein. Die Bewegung zur Aktivierung oder Deaktivierung der Drahtlosfunktion der Chipkarte verläuft entsprechend der Erstreckung der Schaltausnehmung 21. Über den Winkel der Schaltausnehmung 21 kann die Bewegungsrichtung zum Schalten der Drahtlosfunktion der Chipkarte eingestellt werden.

Die Schaltausnehmung 21 in Form eines Kanals kann mit einer offenen Fläche in der Hauptfläche 12 ausgebildet sein, wobei der Kanal dann später mit einer transparenten Abdeckung wie einer Overlayfolie bedeckt wird. So kann der Nutzer sehen, wo sich die Kugel befindet beziehungsweise kann direkt erkennen, ob eine Überbrückung mit Hilfe der Kugel vorliegt.

Weiter ist es möglich, dass der Bereich des sichtbaren Fensters derart ausgebildet ist, dass der Nutzer aktiv auf den Sichtbereich mit der Kugel drückt, um die Kugel aus der Überbrückung heraus zu bewegen, um so die Drahtlosfunktion der Chipkarte zu aktivieren.

Der metallische Grundkörper 11 kann zwei Halbkörper aufweisen beziehungsweise aus zwei Halbkörpern bestehen, welche an einer Kontaktebene zusammengesetzt sind, wobei die Kontaktebene parallel zu den Hauptflächen verläuft. Die zwei Halbkörper oder Halbzeuge können dann jeweils eine Dicke von etwa 250 µm haben.

Wird der Grundkörper 11 aus zwei Halbkörpern gefertigt, so besteht die Möglichkeit die Schaltausnehmung kurvenförmig zu gestalten. Auf diese Weise lassen sich Schaltkonturen oder -kulissen einstellen, so dass ein unbeabsichtigtes Entsperren der Drahtlosfunktion der Chipkarte verhindert oder erschwert wird. Auch derartige Schaltkonturen oder -kulissen können sichtbar ausgeführt sein.

Fig. 8 zeigt eine Teilansicht einer Hauptfläche 12 eines Grundkörpers 11 mit einer Schaltvorrichtung 20 im Bereich einer Umfangsfläche 16 des Grundkörpers 11. Die Schaltvorrichtung 20 ist hier als Druckschalter oder Taster aus dem Metall des Grundkörpers 11 ausgebildet.

Entsprechend bildet der Schlitz 18 im Bereich der Umfangsfläche 16 eine Schaltausnehmung 21 in Form eines im Wesentlichen parallel zu der Umfangsfläche verlaufenden Teils des Schlitzes und ein von der Umfangsfläche 16 aus bedienbares Schaltelement 22 in Form eines Teils der Umfangsfläche 16.

Bei der Erstellung des Schlitzes 18 kann die Schaltvorrichtung 20 im gleichen Arbeitsgang mit erstellt werden. So wird die im Wesentlichen senkrecht zu dem Schlitz 18 verlaufende Schaltausnehmung 21 ausgenommen. Dabei wird auch das Schaltelement 22, hier zum Beispiel in Form einer Kontaktspitze, ausgebildet.

Das Schaltelement 22 ist als Hebel ausgebildet, in Richtung der Längserstreckung des Schlitzes 18 betätigt werden kann. Dazu ist das Schaltelement 22 mit einer Basis an einem Bereich 11a des Grundkörpers 11 angeordnet.

Gegenüberliegend zu der Basis ist die Kontaktspitze des Schaltelements 22 angeordnet. Die Länge des Schaltelements 22 ist derart bemessen, dass die Kontaktspitze an dem anderen Bereich 11b des Grundkörpers 11 angeordnet ist.

In einem ausgeschalteten Zustand hat das Schaltelement 22 mit der Kontaktspitze Kontakt mit dem Bereich 11b des Grundkörpers 11. Dadurch wird der Schlitz 18 elektrisch überbrückt und die Drahtlosfunktion der Chipkarte deaktiviert.

Um die Drahtlosfunktion der Chipkarte einzuschalten, kann auf einen mittleren Teil des Schaltelements 22 gedrückt werden, so dass sich die Kontaktspitze von dem Bereich 11b des Grundkörpers 11 löst. Dadurch wird der Schlitz 18 elektrisch freigegeben und die Drahtlosfunktion der Chipkarte aktiviert.

Der Hohlraum der Schaltausnehmung 21 kann entweder offen gelassen werden oder mit einem Silikonpolster, Teflonmaterial oder anderweitigen elektrisch nichtleitendem Material gefüllt werden, dass sich idealerweise nicht mit dem PVC oder einem ähnlichen Material einer Deckschicht oder Overlayfolie verbindet.

Die in Fig. 8 vorgeschlagene Schaltvorrichtung 20 könnte über einen Sandwichaufbau oder Halbschalenaufbau dahingehend geändert werden, dass das Schaltelement 22 innerhalb des metallischen Grundkörpers 11 arbeitet und keine äußere PVC-Abdeckung hat. Der Taster oder Druckschalter könnte hier zusätzliche Vorsprünge oder Nasen für eine Einrastvorrichtung bekommen, da dieser innerhalb des Sandwiches liegt.

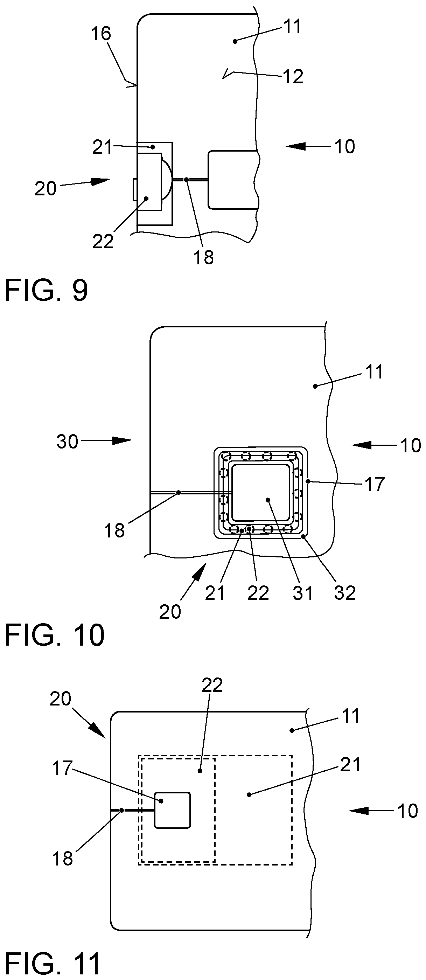

Fig. 9 zeigt eine Teilansicht einer Hauptfläche 12 eines Kartenkörpers 10 mit einer Schaltvorrichtung 20 mit einer Schaltausnehmung 21 in Form einer seitlichen Aussparung und einem darin angeordneten Schaltelement 22 in Form eines Schiebeschalters.

Die rechteckige Schaltausnehmung 21 ist im Bereich der Umfangsfläche 16 vorgesehen und umfasst einen Teil des Schlitzes 18. Die Schaltausnehmung 21 kann als Verlängerung des Schlitzes 18 angesehen werden. Sie erstreckt sich von der der Umfangsfläche 16 in den Grundkörper 11 hinein bis zu dem Schlitz 18.

Die Schaltausnehmung 21 kann zwischen den beiden Hauptflächen 12, 13 ausgebildet sein und ist dann von den beiden Hauptflächen 12, 13 nicht zu sehen. Ebenso ist es möglich, die Schaltausnehmung 21 offen zu einer der Hauptflächen 12, 13 zu gestalten.

Bei einem möglichen Schaltvorgang wird die Stirnseite 16 im Bereich des Schlitzes 18 mit dem Schaltelement 22 in Form eines Schiebeschalters überbrückt. Diese Überbrückung kann auch auf der Grundfläche oder der Deckfläche der Schaltausnehmung 21 erfolgen. Der eingesetzte Schalter kann auch so ausgeführt sein, dass er die Stabilität des Schlitzes 18 erhöht.

Das Einbringen der Schaltausnehmung 21 kann entweder vor der Laminierung der Chipkarte geschehen oder nachdem die Chipkarte fertig produziert ist. Der Schiebeschalter selbst wird dann nach der Produktion des Kartenkörpers in die Schaltausnehmung 21 eingesetzt.

Fig. 10 zeigt eine Teilansicht einer Chipkarte 30 mit einer Hauptfläche eines Kartenkörpers 10.

Die Chipkarte 30 umfasst ein Chipmodul 31, das in der Modulöffnung 17 angeordnet ist und dort zum Beispiel verklebt ist. Das Chipmodul 31 umfasst eine Spule 32. Das Chipmodul 31 umfasst ferner einen Chip, der zum Beispiel in einer Vergussmasse an einer Unterseite einer Kontaktflächenstruktur befestigt ist. Über die Spule 32 wird der Chip mit Energie und/oder Signalen versorgt. So kann ein aus dem metallischen Grundkörper 11 austretendes elektromagnetisches Feld in die Spule 32 eingekoppelt werden. Dabei verlaufen magnetische Feldlinien durch die Modulöffnung 17.

Hier ist die Schaltvorrichtung 20 im Bereich der Spule 32 ausgebildet, insbesondere in der Modulöffnung 17.

Im Bereich der Modulöffnung 17 beziehungsweise der Modulöffnungszone ist mindestens eine Schaltausnehmung 21 eingerichtet zur Aufnahme mindestens eines elektrisch leitenden Schaltelements 22 vorgesehen ist, das in einer Aus-Stellung Windungen der Spule 32 kurzschließt. In diesem Beispiel liegt das Schaltelement 22 in Form von einer oder mehreren Stahlkugeln vor, die jeweils in einer Schaltausnehmung 21 in Form einer halbschalenförmigen Ausnehmung angeordnet sind.

Somit können die Stahlkugeln im Bereich des Chipmoduls 31 auf die Spule 32 elektrisch einwirken und die Spule 32 kurzschließen. Da die einzelnen Windungen der Spule 32 nicht mit einem Schutzlack versehen sind, können die Windungen mit Metallkugeln kurzgeschlossen werden. Die Schaltausnehmungen 21 in Form der Löcher können dann so ausgestaltet sein, dass die Chipkarte 30 entweder nur waagrecht oder wenn sie leicht gekippt wird funktioniert. Andernfalls schließen die Kugeln Teile der Windungen kurz.

Entsprechend überbrückt das Schaltelement 22 in Form von einer oder mehreren Stahlkugeln in einer Aus-Stellung die Spule 32 elektrisch und gibt in einer Ein-Stellung die Spule 32 elektrisch frei.

Die Hauptflächen 12, 13 oder Oberflächen des Grundkörpers 11 können mit einer Kunststoffschicht bedeckt oder laminiert sein. Die Kunststoffschichten können zum Beispiel aus PET, PC, PVC oder PP bestehen und eine Dicke von 200 µm haben. Die Dicke des gesamten Kartenkörpers 10 sollte die maximale Dicke eines Chipkartenkörpers gemäß ISO 7810 nicht übersteigen.

Der Kartenkörper 10 hat zum Beispiel eine nominale Kartendicke von 760 µm. Der metallische Bereich kann zum Beispiel mit einem Laser beziehungsweise einem Fraser bearbeitet werden. Einfräsungen, Abtragungen beziehungsweise Schnitte von minimal 50 µm sind möglich. Somit können Vertiefungen, runde oder auch eckige Sacklöcher, Aussparungen jeglicher Art in den Kartenkörper 10 als Schaltausnehmungen 21 beziehungsweise Schaltelement 22 eingebracht werden.

Die Fign. 1 bis 11 zeigen nicht nur mehrere Beispiele eines Kartenkörpers 10 sondern jeweils auch einer Chipkarte 30, welche den Kartenkörper 10 umfasst.

Fig. 11 zeigt eine Teilansicht einer Hauptfläche eines Kartenkörpers 10 mit einer Schaltvorrichtung 20 mit einem Schaltelement 22 in Form eines Schiebers.

Eine die Modulöffnung 17 beziehungsweise die Modulöffnungszone umgebende Schaltausnehmung 21 ist eingerichtet zur Aufnahme eines elektrisch leitenden Schaltelements 22 in Form eines Schiebers. Der Schieber kann zum Beispiel eine dünne Metallplatte sein. Der Schieber kann von außen direkt betätigt werden, dann hat die Schaltausnehmung 21 eine Öffnung zur Hauptfläche. Alternativ kann der Schieber in dem Kartenkörper 10 angeordnet sein und kann dann von außen indirekt zum Beispiel über einen Hebel betätigt werden.

In einer Aus-Stellung überdeckt das Schaltelement 22 in Form des Schiebers die Modulöffnung 17 beziehungsweise die Modulöffnungszone, wodurch ein magnetischer Fluss in der Modulöffnung 17 blockiert wird. Das Schaltelement 22 bewirkt somit eine Abschirmung von elektromagnetischen Feldern. Dadurch findet kein Energieeintrag in das Chipmodul statt, so dass diese nicht aktiviert werden kann.

Zusätzlich zu der Einwirkung des Schaltelements 22 in Form des Schiebers auf die Modulöffnung 17 kann der Schieber auch den Schlitz 18 überbrücken. Dazu sind die Schaltausnehmung 21 und das Schaltelement 22 derart ausgebildet, dass der Schieber in der Aus-Stellung neben der Modulöffnung 17 auch den Schlitz 18 zumindest teilweise überdeckt.

Entsprechend gibt das Schaltelement 22 in einer Ein-Stellung den magnetischen Fluss in der Modulöffnung 17 frei.

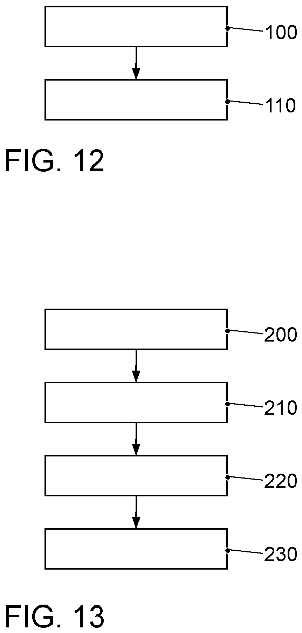

Fig. 12 zeigt eine schematische Darstellung eines Verfahrens zum Schalten einer Drahtlosfunktion einer Chipkarte.

In einem ersten Schritt 100 erfolgt ein Einschalten einer Drahtlosfunktion durch elektrisches Freigeben des Schlitzes 18 und/oder der Spule 32 und/oder durch Freigeben des magnetischen Flusses in der Modulöffnung 17 mittels Bewegens eines Schaltelements 22 in oder an der Schaltausnehmung 21 in eine Ein-Stellung. Wie zuvor anhand der Fign. 3 bis 11 beschrieben, werden ein oder mehrere Schaltelemente 22 geschaltet, um die Energieversorgung der Drahtlosfunktion, des Chipmoduls beziehungsweise einer auf dem Chipmodul befindlichen integrierten Schaltung einzuschalten. In einem Ruhezustand vor dem Einschalten ist die Drahtlosfunktion, das Chipmodul beziehungsweise die auf dem Chipmodul befindliche integrierte Schaltung ausgeschaltet oder deaktiviert.

In einem zweiten Schritt 110 erfolgt ein Ausschalten einer Drahtlosfunktion durch elektrisches Überbrücken des Schlitzes 18 und/oder der Spule 32 und/oder durch Blockieren des magnetischen Flusses in der Modulöffnung 17 mittels Bewegens eines Schaltelements 22 in oder an der Schaltausnehmung 21 in eine Aus-Stellung. Analog zu dem Einschalten erfolgt ein Ausschalten durch eine entgegengesetzte Bewegung des oder der Schaltelemente 22.

Fig. 13 zeigt eine schematische Darstellung eines Verfahrens zur Herstellung eines Kartenkörpers für eine Chipkarte.

In einem ersten Schritt 200 erfolgt ein Bereitstellen des metallischen Grundkörpers 11 mit zwei gegenüberliegenden Hauptflächen 12, 13 und einer die beiden Hauptflächen 12, 13 verbindenden, umlaufenden Umfangsfläche 14. In den beiden Hauptflächen 12, 13 kann eine die beiden Hauptflächen 12, 13 verbindende Modulöffnung bereits vorgesehen sein oder auch erst später in einer Modulöffnungszone vorgesehen werden.

Zudem erfolgt ein Erzeugen des Schlitzes 18, der sich zwischen den beiden Hauptflächen 12, 13 und von der Umfangsfläche 14 bis zu der Modulöffnung 17 erstreckt. Sollte die Modulöffnung 17 in einem späteren Fertigungsschritt hergestellt werden, wird der Schlitz bis zu der entsprechenden Modulöffnungszone erzeugt, wo die Modulöffnung später ausgebildet werden soll.

Das Werkzeug zur Erstellung des Schlitzes 18 kann dabei auf die Umfangsfläche 14 gerichtet sein, idealerweise senkrecht auf die Umfangsfläche 14. Alternativ oder auch in einem weiteren Arbeitsschritt kann das Werkzeug auf eine der Hauptflächen 12, 13 gerichtet sein. Dies kann zum Beispiel in einem Fräsvorgang oder mittels Laser- oder Wasserstrahlschneiden geschehen.

Gemäß dem obigen Verfahren werden die in den Fign. 1 bis 9 dargestellten Grundkörper 11 ausgebildet.

In einem zweiten Schritt 210 erfolgt ein Vorsehen einer Schaltvorrichtung 20 mit einem Schaltelement 22 und einer Schaltausnehmung 21 zum Schalten einer Drahtlosfunktion der Chipkarte. Im Einzelnen werden dazu die beiden folgenden Schritte 220 und 230 ausgeführt.

In einem dritten Schritt 220 erfolgt ein Erstellen der Schaltausnehmung 21 in Kontakt mit dem Schlitz 18 und/oder innerhalb der Modulöffnung 17. Mittels dieser Anordnung kann ein in oder an der Schaltausnehmung 21 angeordnetes Schaltelement 22 elektrisch auf den Schlitz 18 und/oder auf die Modulöffnung einwirken. Wie zuvor beschrieben, kann die Schaltausnehmung 21 Bestandteil des Schlitzes 18 sein. Ebenso kann der Schlitz 18 Bestandteil der Schaltausnehmung 21 sein. Auch ist es möglich, dass der Schlitz 18 und die Schaltausnehmung 21 zusammenfallen, das heißt identisch sind.

In einem vierten Schritt 230 erfolgt ein Vorsehen des Schaltelements 22 in oder an der Schaltausnehmung 21. Wie zuvor beschrieben, kann das Schaltelement 22 ein in der Schaltausnehmung 21 beweglich angeordnetes Element sein, das teilweise auch entnommen werden kann. Das Schaltelement 22 kann elektrisch leitend oder nichtleitend ausgebildet sein, je nachdem ob eine positive oder negative Schaltcharakteristik eingestellt werden soll. Ebenso können Wände des Schlitzes 18 als Schaltelement 22 vorgesehen sein.

Gemäß der vorliegenden Erfindung ist eine Schaltvorrichtung mit einem Schaltelement und einer Schaltausnehmung zum selektiven Schalten einer Drahtlosfunktion einer Chipkarte vorgesehen. Auf diese Weise kann die Privatsphäre einfach und zuverlässig geschützt und man-in-the-middle Angriffe vermieden werden.

## Patentansprüche

1. Kartenkörper (10) für eine Chipkarte (30), aufweisend
einen metallischen Grundkörper (11) mit zwei gegenüberliegenden Hauptflächen (12, 13), wobei in dem Grundkörper (11) eine Modulöffnung (17) zum Aufnehmen eines Chipmoduls (31) mit einer Spule (32) bereits erzeugt ist oder in einer Modulöffnungszone noch erzeugt wird, und
einen Schlitz (18), der sich von einer Umfangsfläche (16) des Grundkörpers (11) bis zu der Modulöffnung (17) oder bis zu der Modulöffnungszone erstreckt und der sich zwischen den beiden Hauptflächen (12, 13) erstreckt,
wobei eine Schaltvorrichtung (20) mit einem Schaltelement (22) und einer Schaltausnehmung (21) zum Schalten einer Drahtlosfunktion der Chipkarte (30) vorgesehen ist,
wobei die Schaltausnehmung (21) in Kontakt mit dem Schlitz (18) und/oder innerhalb der Modulöffnung (17) oder der Modulöffnungszone angeordnet ist,
wobei das Schaltelement (22) in oder an der Schaltausnehmung (21) vorgesehen ist, wobei das Schaltelement (22) in einer Aus-Stellung den Schlitz (18) und/oder die Spule (32) elektrisch überbrückt und/oder einen magnetischen Fluss in der Modulöffnung (17) blockiert, und
wobei das Schaltelement (22) in einer Ein-Stellung den Schlitz (18) und/oder die Spule (32) elektrisch freigibt und/oder den magnetischen Fluss in der Modulöffnung (17) freigibt, **dadurch gekennzeichnet, dass**
die Schaltausnehmung (21) als Querschnittskontur zu einer Längserstreckung des Schlitzes (18) in diesem ausgebildet ist und dass ein Querschnitt des Schaltelements (22) der Querschnittskontur entspricht, wobei das Schaltelement (22) in die Schaltausnehmung (21) einführbar und entnehmbar ist, wobei
das Schaltelement (22) aus einem elektrisch nichtleitenden Material besteht und dass der Querschnitt des Schaltelements (22) größer ist als die Querschnittskontur des Schlitzes (18), so dass das eingeführte Schaltelement (22) den Schlitz (18) aufdehnt.

2. Kartenkörper (10) nach Anspruch 1, **dadurch gekennzeichnet, dass** der Schlitz (18) eine Kontur aufweist, die eine Überlappung in einer Richtung senkrecht zu einer Hauptfläche (12) zwischen zwei gegenüberliegenden Wänden (18a, 18b) des Schlitzes (18) vorsieht, dass der Schlitz (18) die Schaltausnehmung (21) bildet und dass die zwei gegenüberliegenden Wände (18a, 18b) das Schaltelement (22) bilden.

3. Kartenkörper (10) nach Anspruch 1, **dadurch gekennzeichnet, dass** in dem Schlitz (18) ein Federelement von der Umfangsfläche (16) beabstandet derart angeordnet ist, dass das Federelement ein Entnehmen des Schaltelements (22) aus dem Schlitz (18) unterstützt.

4. Kartenkörper (10) nach Anspruch 1, **dadurch gekennzeichnet, dass** die Schaltausnehmung (21) als Kanal ausgebildet ist, der einen Überschneidungsbereich (21a) mit dem Schlitz (18) und einen von dem Schlitz (18) beabstandeten Haltebereich (21b) aufweist, und dass das Schaltelement (22) beweglich in dem Kanal angeordnet ist.

5. Kartenkörper (10) nach Anspruch 4, **dadurch gekennzeichnet, dass** das Schaltelement (22) mindestens eine Kugel umfasst.

6. Kartenkörper (10) nach Anspruch 4 oder 5, **dadurch gekennzeichnet, dass** der Kanal mit einer offenen Fläche in der Hauptfläche (12) ausgebildet ist und dass der Kanal mit einer transparenten Abdeckung bedeckt ist.

7. Kartenkörper (10) nach Anspruch 1, **dadurch gekennzeichnet, dass** der Schlitz (18) im Bereich (11a, 11b) der Umfangsfläche (16) eine Schaltausnehmung (21) in Form eines im Wesentlichen parallel zu der Umfangsfläche (16) verlaufenden Teils des Schlitzes (18) und ein von der Umfangsfläche (16) bedienbares Schaltelement (22) in Form eines Teils der Umfangsfläche (16) aufweist.

8. Kartenkörper (10) nach Anspruch 7, **dadurch gekennzeichnet, dass** der Teil des Schlitzes (18) mit einem elektrisch nichtleitenden Material gefüllt ist.

9. Kartenkörper (10) nach Anspruch 1, **dadurch gekennzeichnet, dass** im Bereich (11a, 11b) der Umfangsfläche (16) eine einen Teils des Schlitzes (18) umfassende rechteckige Schaltausnehmung (21) eingerichtet zur Aufnahme eines Schaltelements (22) vorgesehen ist.

10. Kartenkörper (10) nach Anspruch 1, **dadurch gekennzeichnet, dass** im Bereich (11a, 11b) der Modulöffnung (17) beziehungsweise der Modulöffnungszone mindestens eine Schaltausnehmung (21) eingerichtet zur Aufnahme eines elektrisch leitenden Schaltelements (22) vorgesehen ist, das in einer Aus-Stellung Windungen der Spule (32) kurzschließt.

11. Kartenkörper (10) nach Anspruch 1, **dadurch gekennzeichnet, dass** eine die Modulöffnung (17) beziehungsweise die Modulöffnungszone umgebende Schaltausnehmung (21) eingerichtet zur Aufnahme eines elektrisch leitenden Schaltelements (22) in Form eines Schiebers vorgesehen ist, der in einer Aus-Stellung die Modulöffnung (17) beziehungsweise die Modulöffnungszone überdeckt.

12. Kartenkörper (10) nach Anspruch 1, **dadurch gekennzeichnet, dass** der metallische Grundkörper (11) zwei Halbkörper aufweist, welche an einer Kontaktebene zusammengesetzt sind, wobei die Kontaktebene parallel zu den Hauptflächen (12, 13) verläuft.

13. Chipkarte (30), umfassend einen Kartenkörper (10) nach einem der Ansprüche 1 bis 12 und ein zumindest teilweise in die Modulöffnung (17) des Kartenkörpers (10) eingebettetes Chipmodul (31).

14. Verfahren zum Schalten einer Drahtlosfunktion einer Chipkarte (30) nach Anspruch 13, wobei die Chipkarte (30) einen metallischen Grundkörper (11) mit einem Schlitz (18) und eine Modulöffnung (17) mit einem Chipmodul (31) mit einer Spule (32) aufweist, mit den Schritten:
- Einschalten einer Drahtlosfunktion durch elektrisches Freigeben des Schlitzes (18) und/oder der Spule (32) und/oder durch Freigeben des magnetischen Flusses in der Modulöffnung (17) mittels Bewegens eines Schaltelements (22) in oder an der Schaltausnehmung (21) in eine Ein-Stellung, und/oder
- Ausschalten einer Drahtlosfunktion durch elektrisches Überbrücken des Schlitzes (18) und/oder der Spule (32) und/oder durch Blockieren des magnetischen Flusses in der Modulöffnung (17) mittels Bewegens eines Schaltelements (22) in oder an der Schaltausnehmung (21) in eine Aus-Stellung.

15. Verfahren zur Herstellung eines Kartenkörpers (10) nach einem der Ansprüche 1 bis 12 für eine Chipkarte (30) mit den Schritten:
- Bereitstellen eines metallischen Grundkörpers (11) mit zwei gegenüberliegenden Hauptflächen (12, 13) und einer die beiden Hauptflächen (12, 13) verbindenden, umlaufenden Umfangsfläche (14), wobei in dem Grundkörper (11) eine Modulöffnung (17) zum Aufnehmen eines Chipmoduls (31) bereits erzeugt ist oder in einer Modulöffnungszone noch erzeugt wird, und wobei ein Schlitz (18) zwischen der Umfangsfläche (16) und der Modulöffnung (17) oder der Modulöffnungszone ausgebildet ist,
- Vorsehen einer Schaltvorrichtung (20) mit einem Schaltelement (22) und einer Schaltausnehmung (21) zum Schalten einer Drahtlosfunktion der Chipkarte (30), durch
- Erstellen der Schaltausnehmung (21) in Kontakt mit dem Schlitz (18) und/oder innerhalb der Modulöffnung (17), und
- Vorsehen des Schaltelements (22) in oder an der Schaltausnehmung (21).

## Claims

1. Card body (10) for a chip card (30), having
a metal main body (11) with two opposite main surfaces (12, 13), wherein a module opening (17) for receiving a chip module (31) with a coil (32) is already made in the main body (11) or is yet to be made in a module opening zone, and
a slot (18) which extends from a circumferential surface (16) of the main body (11) to the module opening (17) or to the module opening zone and which extends between the two main surfaces (12, 13),
wherein a switching device (20) with a switching element (22) and a switching recess (21) for switching a wireless function of the chip card (30) is provided,
wherein the switching recess (21) is arranged in contact with the slot (18) and/or inside the module opening (17) or the module opening zone,
wherein the switching element (22) is provided in or on the switching recess (21),
wherein the switching element (22) in an off position electrically bridges the slot (18) and/or the coil (32) and/or blocks a magnetic flux in the module opening (17), and
wherein the switching element (22) in an on position electrically enables the slot (18) and/or the coil (32) and/or enables the magnetic flux in the module opening (17), **characterized in that**
the switching recess (21) is formed in the slot (18) as a cross-sectional contour in relation to a longitudinal extent of the said slot and **in that** a cross section of the switching element (22) corresponds to the cross-sectional contour, wherein the switching element (22) can be inserted into and removed from the switching recess (21), wherein
the switching element (22) consists of an electrically nonconductive material and **in that** the cross section of the switching element (22) is larger than the cross-sectional contour of the slot (18), so that the inserted switching element (22) expands the slot (18).

2. Card body (10) according to Claim 1, **characterized in that** the slot (18) has a contour which provides an overlap in a direction perpendicular to a main surface (12) between two opposing walls (18a, 18b) of the slot (18), **in that** the slot (18) forms the switching recess (21) and **in that** the two opposing walls (18a, 18b) form the switching element (22).

3. Card body (10) according to Claim 1, **characterized in that** a spring element is arranged in the slot (18) at such a distance from the circumferential surface (16) that the spring element assists removal of the switching element (22) from the slot (18).

4. Card body (10) according to Claim 1, **characterized in that** the switching recess (21) is formed as a channel which has an intersecting region (21a) with the slot (18) and a holding region (21b) at a distance from the slot (18), and **in that** the switching element (22) is arranged movably in the channel.

5. Card body (10) according to Claim 4, **characterized in that** the switching element (22) comprises at least one sphere.

6. Card body (10) according to Claim 4 or 5, **characterized in that** the channel is formed with an open area in the main surface (12) and **in that** the channel is covered by a transparent covering.

7. Card body (10) according to Claim 1, **characterized in that** the slot (18) has in the region (11a, 11b) of the circumferential surface (16) a switching recess (21) in the form of a part of the slot (18) that runs substantially parallel to the circumferential surface (16) and has a switching element (22) in the form of part of the circumferential surface (16) that can be operated from the circumferential surface (16).

8. Card body (10) according to Claim 7, **characterized in that** the part of the slot (18) is filled with an electrically nonconductive material.

9. Card body (10) according to Claim 1, **characterized in that** a rectangular switching recess (21), comprising a part of the slot (18) and designed for receiving a switching element (22), is provided in the region (11a, 11b) of the circumferential surface (16).

10. Card body (10) according to Claim 1, **characterized in that** at least one switching recess (21), designed for receiving an electrically conductive switching element (22) which in an off position short-circuits turns of the coil (32), is provided in the region (11a, 11b) of the module opening (17) or the module opening zone.

11. Card body (10) according to Claim 1, **characterized in that** a switching recess (21) is provided, surrounding the module opening (17) or the module opening zone and designed for receiving an electrically conductive switching element (22) in the form of a slide which in an off position covers the module opening (17) or the module opening zone.

12. Card body (10) according to Claim 1, **characterized in that** the metal main body (11) has two half bodies, which are placed together at a contact plane, wherein the contact plane runs parallel to the main surfaces (12, 13).

13. Chip card (30), comprising a card body (10) according to one of Claims 1 to 12 and a chip module (31) at least partially embedded in the module opening (17) of the card body (10).

14. Method for switching a wireless function of a chip card (30) according to Claim 13, wherein the chip card (30) has a metal main body (11) with a slot (18) and a module opening (17) with a chip module (31) with a coil (32), comprising the steps of:
- switching on a wireless function by electrically enabling the slot (18) and/or the coil (32) and/or by enabling the magnetic flux in the module opening (17) by means of moving a switching element (22) in or on the switching recess (21) into an on position, and/or
- switching off a wireless function by electrically bridging the slot (18) and/or the coil (32) and/or by blocking the magnetic flux in the module opening (17) by means of moving a switching element (22) in or on the switching recess (21) into an off position.

15. Method for producing a card body (10) according to one of Claims 1 to 12 for a chip card (30), comprising the steps of:
- providing a metal main body (11) with two opposite main surfaces (12, 13) and a peripheral circumferential surface (14) connecting the two main surfaces (12, 13), wherein a module opening (17) for receiving a chip module (31) is already made in the main body (11) or is yet to be made in a module opening zone, and wherein a slot (18) is formed between the circumferential surface (16) and the module opening (17) or the module opening zone,
- providing a switching device (20) with a switching element (22) and a switching recess (21) for switching a wireless function of the chip card (30), by
- creating the switching recess (21) in contact with the slot (18) and/or inside the module opening (17), and
- providing the switching element (22) in or on the switching recess (21).

## Revendications

1. Corps de carte (10) pour une carte à puce (30), comportant
un corps principal métallique (11) comprenant deux surfaces principales opposées (12, 13), une ouverture de module (17) destinée à recevoir un module de puce (31) avec une bobine (32) étant déjà réalisée dans le corps principal (11) ou devant encore être réalisée dans une zone d'ouverture de module, et
une fente (18) qui s'étend à partir d'une surface circonférentielle (16) du corps principal (11) jusqu'à l'ouverture de module (17) ou jusqu'à la zone d'ouverture de module et qui s'étend entre les deux surfaces principales (12, 13),
un appareil de commutation (20) comprenant un élément de commutation (22) et un évidement de commutation (21) étant prévu pour commuter une fonction sans fil de la carte à puce (30),
l'évidement de commutation (21) étant disposé en contact avec la fente (18) et/ou à l'intérieur de l'ouverture de module (17) ou de la zone d'ouverture de module,
l'élément de commutation (22) étant disposé dans ou sur l'évidement de commutation (21),
l'élément de commutation (22) reliant électriquement la fente (18) et/ou la bobine (32) et/ou bloquant un flux magnétique dans l'ouverture de module (17) dans une position d'arrêt, et
l'élément de commutation (22) libérant électriquement la fente (18) et/ou la bobine (32) et/ou permettant le flux magnétique dans l'ouverture de module (17) dans une position de marche, **caractérisé en ce que**
l'évidement de commutation (21) est réalisé sous forme de contour en coupe transversale par rapport à une extension longitudinale de la fente (18) dans celle-ci et **en ce qu'**une section transversale de l'élément de commutation (22) correspond au contour en coupe transversale, l'élément de commutation (22) pouvant être inséré dans l'évidement de commutation (21) et retiré de celui-ci, dans lequel
l'élément de commutation (22) est constitué d'un matériau électriquement non conducteur et **en ce que** la section transversale de l'élément de commutation (22) est plus grande que le contour en coupe transversale de la fente (18), de sorte que l'élément de commutation (22) inséré dilate la fente (18).

2. Corps de carte (10) selon la revendication 1, **caractérisé en ce que** la fente (18) présente un contour qui conduit à un chevauchement dans une direction perpendiculaire à une surface principale (12) entre deux parois opposées (18a, 18b) de la fente (18), **en ce que** la fente (18) forme l'évidement de commutation (21) et **en ce que** les deux parois opposées (18a, 18b) forment l'élément de commutation (22).

3. Corps de carte (10) selon la revendication 1, **caractérisé en ce qu'**un élément de ressort est disposé dans la fente (18) à distance de la surface circonférentielle (16) de manière à ce que l'élément de ressort facilite le retrait de l'élément de commutation (22) hors de la fente (18).

4. Corps de carte (10) selon la revendication 1, **caractérisé en ce que** l'évidement de commutation (21) est réalisé sous forme de canal présentant une zone de chevauchement (21a) avec la fente (18) et une zone de maintien (21b) espacée de la fente (18), et **en ce que** l'élément de commutation (22) est disposé de manière mobile dans le canal.

5. Corps de carte (10) selon la revendication 4, **caractérisé en ce que** l'élément de commutation (22) comprend au moins une bille.

6. Corps de carte (10) selon la revendication 4 ou 5, **caractérisé en ce que** le canal est réalisé de manière à comprendre une surface ouverte dans la surface principale (12) et **en ce que** le canal est recouvert d'un couvercle transparent.

7. Corps de carte (10) selon la revendication 1, **caractérisé en ce que** la fente (18) présente, dans la zone (11a, 11b) de la surface circonférentielle (16), un évidement de commutation (21) sous la forme d'une partie de la fente (18) s'étendant sensiblement parallèlement à la surface circonférentielle (16) et un élément de commutation (22) actionnable depuis la surface circonférentielle (16) sous la forme d'une partie de la surface circonférentielle (16).

8. Corps de carte (10) selon la revendication 7, **caractérisé en ce que** la partie de la fente (18) est remplie d'un matériau électriquement non conducteur.

9. Corps de carte (10) selon la revendication 1, **caractérisé en ce que**, dans la zone (11a, 11b) de la surface circonférentielle (16), il est prévu un évidement de commutation rectangulaire (21) comprenant une partie de la fente (18) pour recevoir un élément de commutation (22).

10. Corps de carte (10) selon la revendication 1, **caractérisé en ce que**, dans la région (11a, 11b) de l'ouverture de module (17) ou de la zone d'ouverture de module, il est prévu au moins un évidement de commutation (21) pour recevoir un élément de commutation électriquement conducteur (22) qui, dans une position d'arrêt, court-circuite les spires de la bobine (32).

11. Corps de carte (10) selon la revendication 1, **caractérisé en ce qu'**il est prévu un évidement de commutation (21) entourant l'ouverture de module (17) ou la zone d'ouverture de module pour recevoir un élément de commutation électriquement conducteur (22) sous la forme d'un curseur qui, dans une position d'arrêt, recouvre l'ouverture de module (17) ou la zone d'ouverture de module.

12. Corps de carte (10) selon la revendication 1, **caractérisé en ce que** le corps principal métallique (11) comprend deux demi-corps assemblés au niveau d'un plan de contact, le plan de contact s'étendant parallèlement aux surfaces principales (12, 13).

13. Carte à puce (30), comprenant un corps de carte (10) selon l'une quelconque des revendications 1 à 12 et un module de puce (31) au moins partiellement intégré dans l'ouverture de module (17) du corps de carte (10).

14. Procédé de commutation d'une fonction sans fil d'une carte à puce (30) selon la revendication 13, la carte à puce (30) comportant un corps principal métallique (11) présentant une fente (18) et une ouverture de module (17) contenant un module de puce (31) avec une bobine (32), comprenant les étapes suivantes :
- activation d'une fonction sans fil en libérant électriquement la fente (18) et/ou la bobine (32) et/ou en permettant le flux magnétique dans l'ouverture de module (17) par déplacement d'un élément de commutation (22) dans ou sur l'évidement de commutation (21) dans une position de marche, et/ou
- désactivation d'une fonction sans fil en pontant électriquement la fente (18) et/ou la bobine (32) et/ou en bloquant le flux magnétique dans l'ouverture de module (17) par déplacement d'un élément de commutation (22) dans ou sur l'évidement de commutation (21) dans une position d'arrêt.

15. Procédé de fabrication d'un corps de carte (10) selon l'une quelconque des revendications 1 à 12 pour une carte à puce (30), comprenant les étapes suivantes :
- fourniture d'un corps principal métallique (11) comprenant deux surfaces principales opposées (12, 13) et une surface circonférentielle périphérique (14) reliant les deux surfaces principales (12, 13), une ouverture de module (17) destinée à recevoir un module de puce (31) étant déjà réalisée dans le corps principal (11) ou devant encore être réalisée dans une zone d'ouverture de module, et une fente (18) étant formée entre la surface circonférentielle (16) et l'ouverture de module (17) ou la zone d'ouverture de module,
- fourniture d'un appareil de commutation (20) comprenant un élément de commutation (22) et un évidement de commutation (21) pour commuter une fonction sans fil de la carte à puce (30), par
- création de l'évidement de commutation (21) en contact avec la fente (18) et/ou à l'intérieur de l'ouverture de module (17), et
- fourniture de l'élément de commutation (22) dans ou sur l'évidement de commutation (21).
